# EUROPEAN PATENT APPLICATION

(11) **EP 4 545 887 A1**
(43) Date of publication of application: **30.04.2025**
(21) Application number: 23825890.9
(22) Date of filing: 04.04.2023
(51) Int. Cl.: F25D 23/02, H02G 3/04

(54) **REFRIGERATION DEVICE**

(30) Priority: 24.06.2022 CN 202210730098
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHOU, Zhixiang, Qingdao, Shandong 266101 (CN); WANG, Dong, Qingdao, Shandong 266101 (CN); LIU, Min, Qingdao, Shandong 266101 (CN)
(74) Representative: Winter, Brandl - Partnerschaft mbB
(86) International application number: PCT/CN2023/086116
(87) International publication number: WO 2023/246235

(57) **Abstract**

Disclosed in the present invention is a refrigeration device, comprising a device body, a door body, an embedded box, and a front cover assembly. The embedded box is provided with two wiring cavities having forward openings, and the two wiring cavities are arranged in the left-right direction; the front cover assembly has a first state in which the wiring cavity on the left side is covered and the wiring cavity on the right side is exposed, and a second state in which the wiring cavity on the right side is covered and the wiring cavity on the left side is exposed; each wiring cavity is used for a wire harness connected to a display screen on the door body to pass, and the wire harness can select to pass through the wiring cavity on the left side or the wiring cavity on the right side.

## Description

### CROSS REFERENCE TO RELATED APPLICATIONS

The present application claims the priority of Chinese Patent Application filed on June 24, 2022, with application number 202210730098.0, entitled "Refrigeration Device", the entire content of which is incorporated herein by reference.

### TECHNICAL FIELD

The present application relates to the field of refrigeration apparatuses, particularly to a refrigeration device.

### BACKGROUND

Certain models of refrigerators, freezers, and other refrigeration devices have display components installed on their door bodies, which require connection to control assemblies within the refrigeration device via harnesses. Specifically, the refrigeration device includes a device body, a door body, and hinges connecting the device body to the door body. Inside the device body, there is an embedded box and a control assembly located within the embedded box. The device body is equipped with holes for the harnesses to pass through. The harnesses exit the embedded box and the device body, then pass through preset holes in the hinge shaft into the door body.

However, for refrigeration devices that can switch between left-opening and right-opening states, the hinges switch between two positions on the left or right side of the device. The portion of the harness between the device body and the door body is shorter in one state (left or right opening) and longer in the other state. If the exposed length of the harness between the device body and the door body is long, the risk of damage to the harness is significantly increased.

### SUMMARY

The object of the present application is to provide a refrigeration device with two wiring cavities.

In particular, the present application is directed to a refrigeration apparatus comprising:
a device body having a compartment and an accommodation chamber both opening forward;
a door body disposed in front of the device body to open or close the compartment;
an embedded box disposed in the accommodation chamber, the embedded box having two wiring cavities opening forward and arranged side by side in a left-right direction;
a front cover assembly disposed in front of the accommodation chamber;
the front cover assembly has a first state where it covers the wiring cavity on a left side and exposes the wiring cavity on a right side, and a second state where it covers the wiring cavity on the right side and exposes the wiring cavity on a left side.

Further, the door body is provided with two wiring passages distributed side by side in the left-right direction, and the wiring passages extend to form holes on the side of the door body close to the front cover assembly, with the positions of the two wiring passages corresponding one-to-one with the two wiring cavities.

Further, the refrigeration device further comprises a control assembly and a door harness, the embedded box defines an accommodation cavity opening forward and located between the two wiring cavities, the control assembly is disposed in the accommodation cavity, a front side of the control assembly is equipped with a connector, the door harness is connected to the connector and passing through the connector into the wiring cavity and then into the wiring passage.

Further, the embedded box has a partition wall separating the accommodation cavity from the wiring cavity, the partition wall has a recess on a front side thereof, the refrigeration device further comprises a seal installed in the recess, the seal has a wiring hole through which the door harness passes.

Further, the refrigeration device further comprises a wiring structure installed on the door body and extending from the door body into the interior of the wiring cavity, the wiring structure defines a wiring channel communicating with the wiring passage, the wiring structure is movable relative to the wiring cavity, the wiring channel extends to an end of the wiring structure that extends into the wiring cavity to form an inlet; the door harness is entering the wiring channel through the inlet and then passing into the wiring passage.

Further, when the front cover assembly is in the first state, the wiring structure is installed on the right part of the door body and extends into the wiring cavity on the right side, the wiring channel is communicating with a right wiring passage;
when the front cover assembly is in the second state, the wiring structure is installed on the left part of the door body and extends into the wiring cavity on the left side, the wiring channel is communicating with a left wiring passage.

Further, the refrigeration device further comprises a first decorative cover, the first decorative cover covers the wiring cavity on the right side when the front cover assembly is in the first state, and covers the wiring cavity on the left side when the front cover assembly is in the second state;
the first decorative cover has a first opening exposing the wiring cavity, through which the wiring structure passes.

Further, inner walls of the two wiring cavities that are farther from each other in the left-right direction are provided with first slots, and the top and bottom walls of the two wiring cavities are provided with second slots symmetrically arranged along a longitudinal direction;
a rear side of the first decorative cover has a first latching portion for engaging with the first slot, and two second latching portions are symmetrically arranged along the longitudinal direction for engaging with the second slots.

Further, the first decorative cover has a block installed on the first opening, a longitudinal length of the first opening is greater than a longitudinal length of the block, the first decorative cover further has a first block fixing portion and a second block fixing portion arranged along the longitudinal direction;
when the first decorative cover covers the wiring cavity on the right side, the block is connected to the first block fixing portion, and when the first decorative cover covers the wiring cavity on the right side, the block is connected to the second block fixing portion.

Further, the refrigeration device further comprises a second decorative cover and a third decorative cover symmetrically arranged in the left-right direction, the second decorative cover covers the wiring cavity on the right side when the front cover assembly is in the first state, and the third decorative cover covers the wiring cavity on the right side when the front cover assembly is in the second state, the second decorative cover and the third decorative cover respectively have second openings and third openings exposing the wiring cavity, through which the wiring structure passes.

Further, the top and/or bottom walls of the wiring cavity are provided with third slots and guide grooves, the guide grooves extend horizontally at a preset angle to the left-right direction and forms openings on the front side of the embedded box;
the rear side of the second decorative cover has a third latching portion for engaging with the third slot on the right side and a first guide block for engaging with the guide groove on the right side, the rear side of the third decorative cover has a fourth latching portion for engaging with the third slot on the left side and a second guide block for engaging with the guide groove on the left side.

Further, the rear side of the second decorative cover further has a first support block for placing on the bottom wall of the wiring cavity, and the rear side of the third decorative cover further has a second support block for placing on the bottom wall of the wiring cavity.

Further, the refrigeration device further comprises a drag chain disposed in the wiring cavity, a fixed end of the drag chain is fixed to an inner wall of the wiring cavity, and a movable end of the drag chain is connected to the end of the wiring structure that is farther from the door body.

Further, when the front cover assembly is in the first state and the second state, the front cover assembly covers the accommodation cavity and the control assembly.

Further, the front cover assembly comprises a front cover and a first electronic device installed on a rear side of the front cover; the control assembly has a connecting part for connecting to the first electronic device;
the connecting part is connected to the first electronic device when the front cover assembly is in the first state and the second state, the front cover assembly rotates 180° about an axis passing through the center of the first electronic device and extends in the front-back direction when transitioning from the first state to the second state.

Further, the first electronic device is offset from the center of the front cover in the left-right direction, and the first electronic device is aligned with the center of the front cover in height.

Compared to the prior art, the advantageous effects of the present application include: the wiring cavities are used to allow harnesses connected to the display on the door body to pass through. Due to the presence of two wiring cavities, even if the door body's opening direction is switched left to right, the harness can adaptively choose which side's wiring cavity to exit from, avoiding the portion of the harness between the device body and the door body from being too long, thereby reducing the risk of harness damage. The front cover assembly can cover the unused wiring cavity, enhancing aesthetic appearance, protecting the wiring cavity, and preventing dust from entering the wiring cavity.

### BRIEF DESCRIPTION OF THE DRAWINGS

FIG. 1 is a structural schematic diagram of the refrigeration apparatus in the first state according to an embodiment of the present application;
FIG. 2 is an enlarged view of area A in FIG. 1;
FIG. 3 is a structural schematic diagram of the case body according to an embodiment of the present application;
FIG. 4 is a structural schematic diagram of the refrigeration apparatus in the second state with the inner liner, door body, and hinge assembly hidden according to an embodiment of the present application;
FIG. 5 is a structural schematic diagram of the refrigeration apparatus with the front cover assembly, inner liner, door body, and hinge assembly hidden according to an embodiment of the present application;
FIG. 6 is an enlarged view of area B in FIG. 5;
FIG. 7 is a structural schematic diagram of the front cover assembly according to an embodiment of the present application;
FIG. 8 is a structural schematic diagram of the hinge fixing piece according to an embodiment of the present application;
FIG. 9 is a structural schematic diagram of an embedded box according to the first embodiment of the present application;
FIG. 10 is an enlarged view of area C in FIG. 9;
FIG. 11 is a structural schematic diagram of the embedded box from another perspective according to the first embodiment of the present application;
FIG. 12 is a structural schematic diagram of the first decorative cover according to the first embodiment of the present application;
FIG. 13 is a structural schematic diagram of an embedded box according to the second embodiment of the present application;
FIG. 14 is a structural schematic diagram of the second decorative cover and the third decorative cover according to the second embodiment of the present application;
FIG. 15 is a structural schematic diagram of the second decorative cover according to the second embodiment of the present application;
FIG. 16 is a structural schematic diagram of part of the embedded box, hinge assembly, wire structure, and drag chain according to an embodiment of the present application;
FIG. 17 is a structural schematic diagram of the door body, hinge assembly, wire structure, and drag chain according to an embodiment of the present application; and
FIG. 18 is an enlarged view of area D in FIG. 17.

Wherein:
1. Device body; 101. Outer shell; 102. Inner liner; 103. Compartment; 104. Accommodation chamber;
2. Hinge assembly; 201. First fixing part; 202. Second fixing part; 203. Connecting rod; 204. Third fixing part;
3. Door body; 301. Wiring passage;
4. Front cover assembly; 401. Front cover; 4011. First latching part; 4012. Second latching part; 4013. Positioning part; 402. First electronic device;
5. Hinge fixing part; 501. First connecting plate; 5011. Matching hole; 502. Second connecting plate;
6. Control assembly;
7. Embedded box; 701. accommodation cavity; 702. wiring cavity; 703. First groove; 704. Second groove; 705. First upper cooperative part; 706. Second upper cooperative part; 707. First lower cooperative part; 708. Second lower cooperative part; 709. Positioning groove; 710. Upper shell; 711. Lower shell; 712. Partition wall; 713. First outlet; 714. Second outlet; 715. First slot; 716. Second slot; 717. Third slot; 718. Guide groove;
8. Wire structure; 801. Wire channel; 802. Axial part;
9. Seal; 901. Wiring hole;
10. Drag chain;
11. First decorative cover; 1101. First latching portion; 1102. Second latching portion; 1103. First opening; 1104. block; 11041. Limit protrusion; 11042. Teeth; 1105. First block fixing portion; 1106. Second block fixing portion;
12. Second decorative cover; 1201. Second opening; 1202. Third latching portion; 1203. First guide block; 1204. First support block;
13. Third decorative cover; 1301. Third opening; 1302. Fourth latching portion; 1303. Second guide block; 1304. Second support block.

### DETAILED DESCRIPTION

The following detailed description will be provided with reference to the accompanying drawings, which illustrate specific embodiments of the present application. However, these embodiments are not intended to limit the invention, and any structural, methodological, or functional modifications made by those of ordinary skill in the art based on these embodiments are within the scope of the present application.

In the various drawings, certain dimensions of structures or parts may be enlarged relative to others for illustrative purposes, and thus only serve to illustrate the basic structure of the subject matter of the present application.

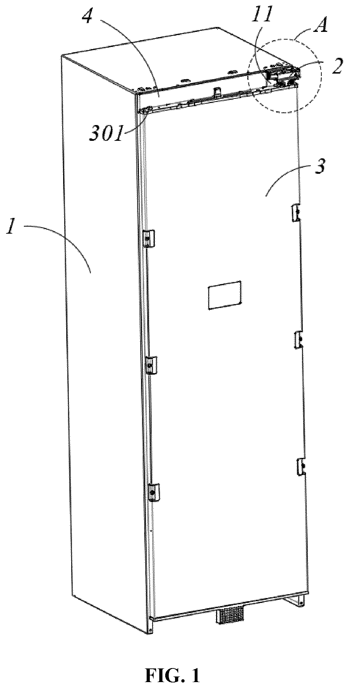

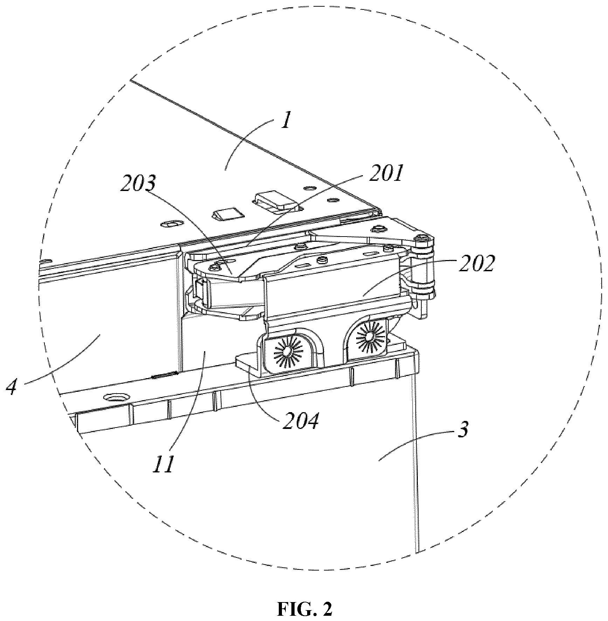

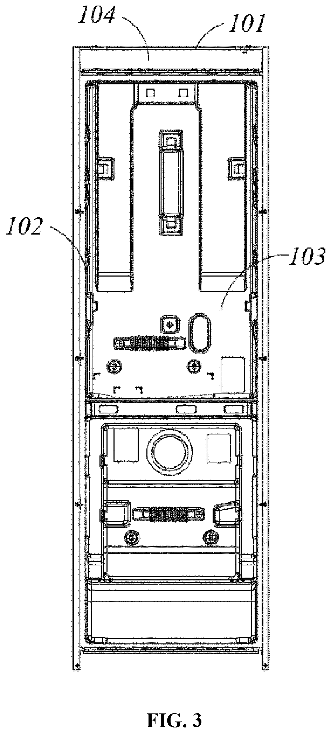

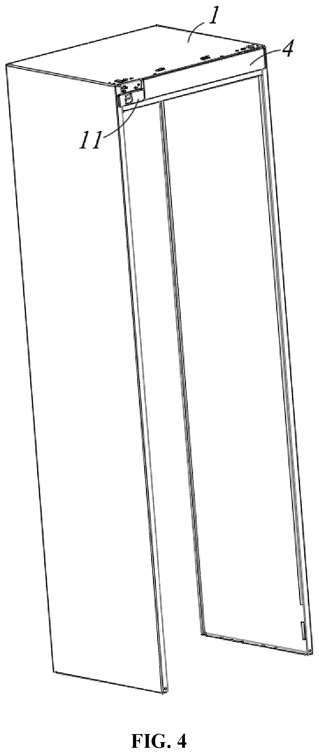

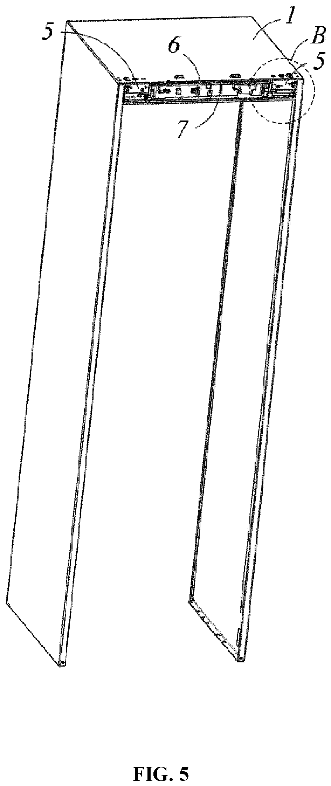

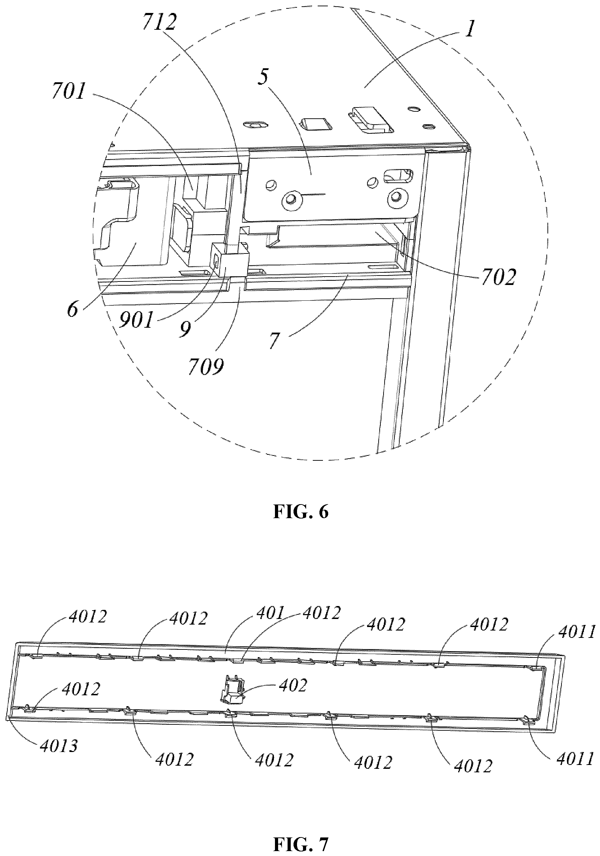

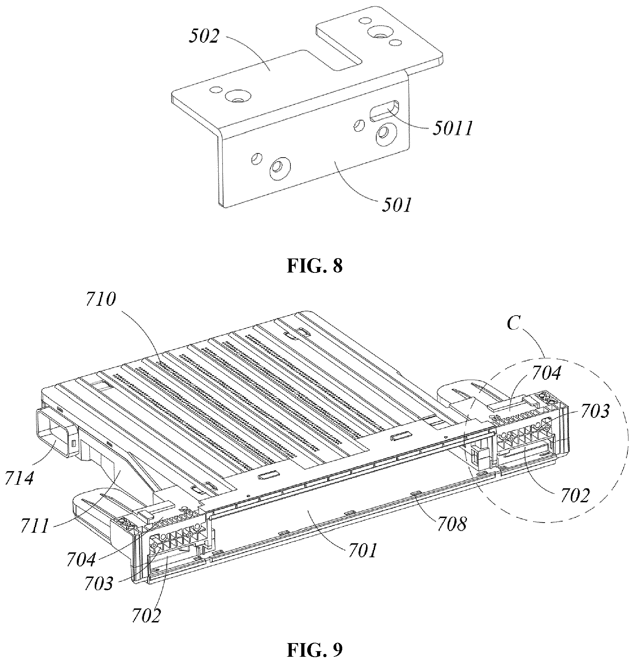

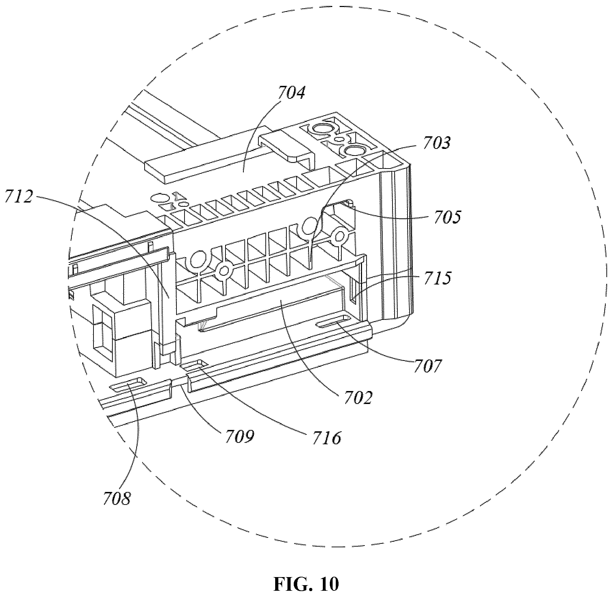

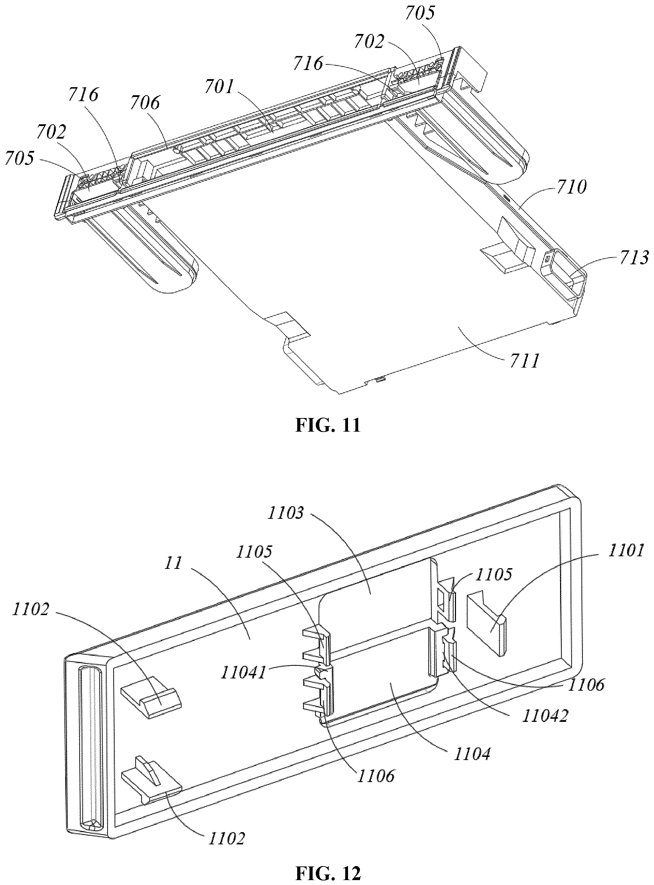

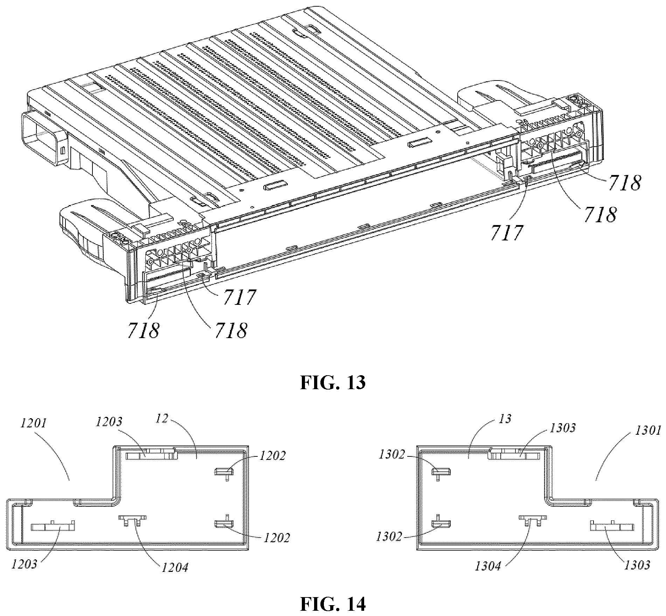

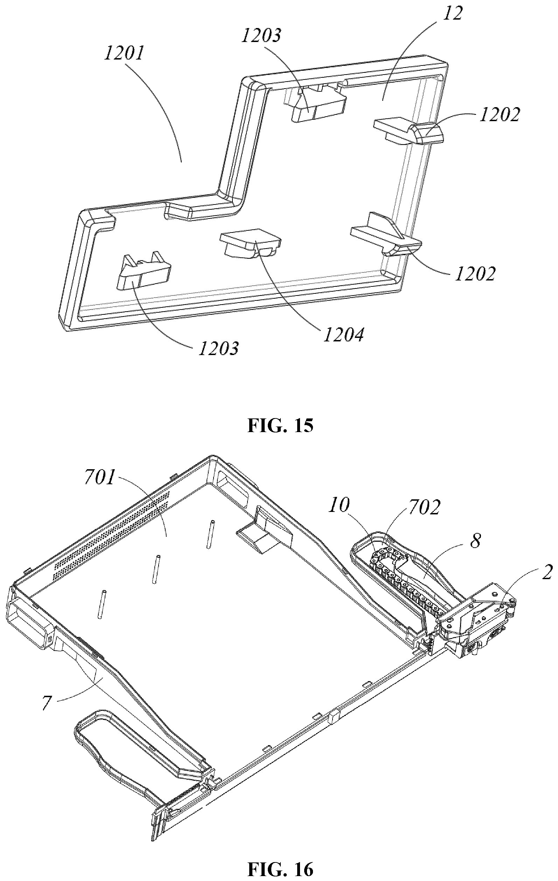

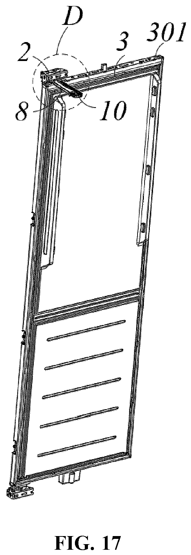

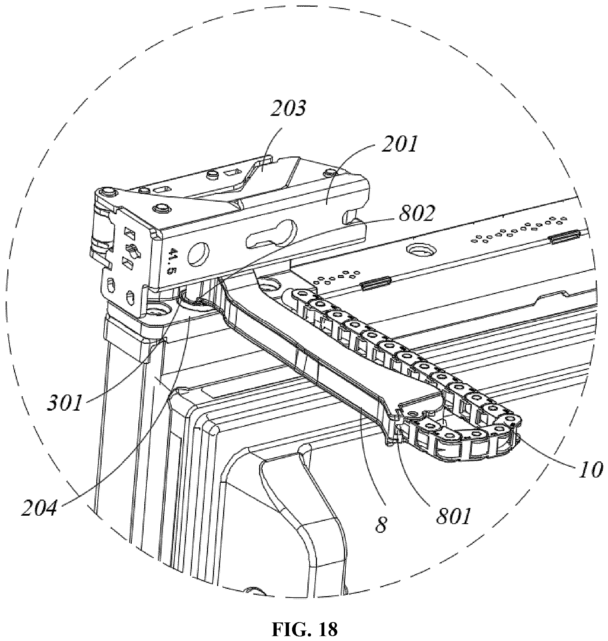

As shown in FIGS. 1 to 18, the present application provides a refrigeration device comprising a device body 1, a door body 3, a front cover assembly 4, and an embedded box 7.

The device body 1 has a compartment 103 and an accommodation chamber 104 both opening forwards.

The door body 3 is disposed in front of the device body 1 to open or close the compartment 103.

The embedded box 7 is disposed in the accommodation chamber 104, the embedded box 7 has two wiring cavities 702 opening forward and arranged side by side in a left-right direction.

The front cover assembly 4 is disposed in front of the accommodation chamber 104, the front cover assembly 4 having a first state where it covers the wiring cavity 702 on a left side and exposes the wiring cavity 702 on a right side, and a second state where it covers a wiring cavity 702 on the right side and exposes the wiring cavity 702 on the left side.

The wiring cavities 702 are used to allow harnesses connected to the display on the door body 3 to pass through. Due to the presence of two wiring cavities 702, even if the door body 3's opening direction is switched left to right, the harness can adaptively choose which side's wiring cavity 702 to exit from, avoiding the portion of the harness between the device body 1 and the door body 3 from being too long, thereby reducing the risk of harness damage. The front cover assembly 4 can cover the unused wiring cavity 702, enhancing aesthetic appearance, protecting the wiring cavity 702, and preventing dust from entering the wiring cavity 702.

The refrigeration device further includes a hinge assembly 2, a control assembly 6, a wiring structure 8, and a door harness.

The device body 1 comprises an outer shell 101 and an inner liner 102 located within the outer shell 101, with the space between the bottom wall of the outer shell 101 and the top wall of the inner liner 102 constituting the accommodation chamber 104. The compartment 103 is arranged in the inner liner 102. The accommodation chamber 104 is located above the compartment 103.

A front side of the device body 1 is provided with two hinge fixing parts 5 distributed in the left-right direction. When the front cover assembly 4 is in the first state, the front cover assembly 4 covers the left hinge fixing part 5, and the hinge assembly 2 connects to the right hinge fixing part 5. When the front cover assembly 4 is in the second state, the front cover assembly 4 covers the right hinge fixing part 5, and the hinge assembly 2 connects to the left hinge fixing part 5.

The front cover assembly 4, in the first and second states, respectively covers the left hinge fixing part 5 and the right hinge fixing part 5, for preventing the unused hinge fixing part 5 from being exposed, thereby enhancing aesthetic appearance and protecting the unused hinge fixing part 5.

The hinge assembly 2 is connected to the door body 3. In the first and second states of the front cover assembly 4, the refrigeration device has different opening directions, achieving the function of switching the opening direction left to right.

The embedded box 7 has an accommodation cavity 701 opening forward and located between the two wiring cavities 702. The control assembly 6 is disposed in the accommodation cavity 701.

When the front cover assembly 4 is in the first and second states, the front cover assembly 4 covers the accommodation cavity 701 and the control assembly 6, enhancing aesthetic appearance and protecting the control assembly 6.

The front cover assembly 4 rotates 180° when in the first state relative to when in the second state. That is, in the process of switching the front cover assembly 4 between the first state and the second state, the front cover assembly 4 needs to be rotated 180°.

The front cover assembly 4 comprises a front cover 401 and a first electronic device 402 installed on a rear side of the front cover 401; the control assembly 6 has a connecting part for connecting to the first electronic device 402. When the front cover assembly 4 is in the first state and the second state, the connecting part is connected to the first electronic device 402. The front cover assembly 4 rotates 180° about an axis passing through the center of the first electronic device 402 and extending in the front-back direction when transitioning from the first state to the second state. That is, after the rotation of the front cover assembly 4, the center position of the first electronic device 402 does not change, ensuring the connection between the first electronic device 402 and the connecting part.

Specifically, the first electronic device 402 is a magnetic sensitive switch. The magnetic sensitive switch is used to detect external temperature, and the first electronic device 402 being set on the front cover 401 ensures the accuracy of external temperature detection.

The connecting part is detachably connected to the first electronic device 402. For example, the connecting part and the first electronic device 402 can be plugged together, in which case the connecting part is a connector. The connecting part and the first electronic device 402 can also be connected through direct contact, in which case the connecting part is a metal contact piece.

The first electronic device 402 is offset from the center of the front cover 401 in the left-right direction. When the front cover assembly 4 is in the first state, the first electronic device 402 is located in the right half area of the front cover 401, meaning the area of the front cover 401 on the left side of the first electronic device 402 is larger, thereby facilitating the front cover 401 to cover the left hinge fixing part 5 and the wiring cavity 702 on the right side. When the front cover assembly 4 is in the second state, the first electronic device 402 is located in the left half area of the front cover 401, meaning the area of the front cover 401 on the right side of the first electronic device 402 is larger, thereby facilitating the front cover 401 to cover the right hinge fixing part 5 and the wiring cavity 702 on the right side.

The first electronic device 402 is aligned with the center of the front cover 401 in height. This way, after the front cover assembly 4 rotates 180°, the height of the center of the first electronic device 402 does not change, preventing the first electronic device 402 from separating from the connecting part.

When the front cover assembly 4 is in the first state and the second state, the front cover 401 is always installed on the front side of the embedded box 7.

The wiring cavity 702 corresponds longitudinally with the hinge fixing part 5, facilitating the front cover assembly 4 to cover both the hinge fixing part 5 and the wiring cavity 702 simultaneously.

Preferably, the wiring cavity 702 is located below the hinge fixing part 5. When the hinge assembly 2 is installed on the hinge fixing part 5, the hinge assembly 2 can cover at least part of the wiring cavity 702 and part of the harness, further enhancing aesthetic appearance.

The hinge fixing part 5 can be integrated with the device body 1 or can be a separate part installed on the device body 1.

Preferably, the hinge fixing part 5 comprises a first connecting plate 501 for connecting to the hinge assembly 2 and a second connecting plate 502 for connecting to the device body 1, with the embedded box 7 located behind the first connecting plate 501.

The first connecting plate 501 is installed on the front side of the embedded box 7, and the second connecting plate 502 is fixed within the accommodation chamber 104 and located between the embedded box 7 and the top wall of the accommodation chamber 104. The first connecting plate 501 extends longitudinally, and the second connecting plate 502 extends horizontally backward from the top of the first connecting plate 501.

The hinge fixing part 5 is simultaneously connected to both the device body 1 and the embedded box 7, enhancing the stability of the hinge fixing part 5, and using the hinge fixing part 5 to fix the embedded box 7 to the device body 1, simplifying the structure.

Specifically, the front side of the embedded box 7 above the wiring cavity 702 and the first connecting plate 501 are provided with horizontally extending first through holes, which are used for fasteners to pass through, connecting the first connecting plate 501 with the embedded box 7. The device body 1, the second connecting plate 502, and the embedded box 7 are provided with longitudinally extending second through holes, which are used for fasteners to pass through. The second connecting plate 502 and the embedded box 7 are provided with longitudinally extending third through holes, which are used for fasteners to pass through, connecting the second connecting plate 502 and the embedded box 7 together.

The front part of the embedded box 7 is provided with a first groove 703 that cooperates with the first connecting plate 501, and the top part of the embedded box 7 is provided with a second groove 704 that cooperates with the second connecting plate 502. The first groove 703 and the second groove 704 prevent the hinge fixing part 5 from protruding the embedded box 7, preventing the embedded box 7 from not fitting tightly against the top wall of the device body 1, and preventing the embedded box 7 from not fitting tightly against the front cover 401.

The rear side of the front cover 401 is provided with two sets of latching structures symmetrically arranged vertically. The embedded box 7 has two sets of upper and lower cooperative structures distributed vertically, which are used to cooperate with the latching structures respectively when the front cover assembly 4 is in the first state and the second state to fix the front cover assembly 4, ensuring that the front cover assembly 4 can be fixed in both the first and second states.

When the front cover assembly 4 is in the first state, the upper latching structure cooperates with the upper cooperative structure, and the lower latching structure cooperates with the lower cooperative structure. When switching the front cover assembly 4 to the second state, the front cover 401 is rotated 180°. Since the two sets of latching structures are symmetrically arranged vertically, their positions are swapped, with the original upper latching structure moving to the lower position and cooperating with the lower cooperative structure, and the original lower latching structure moving to the upper position and cooperating with the upper cooperative structure. This way, even if the front cover 401 is rotated, the two sets of latching structures and the two sets of cooperative structures can still correspond one-to-one, ensuring the reliability of the connection of the front cover 401 while simplifying the structure.

A length of the embedded box 7 in the left-right direction is greater than a length of the front cover 401 in the left-right direction. The upper cooperative structure includes two first upper cooperative parts 705 respectively corresponding to the two first connecting plates 501 and a second upper cooperative part 706 located between the two first upper cooperative parts 705. The latching structure has a first latching part 4011 for cooperating with the first upper cooperative part 705 and a second latching part 4012 for cooperating with the second upper cooperative part 706. The first latching part 4011 and the second latching part 4012 extend backward from the rear side of the front cover 401, and the first connecting plate 501 is provided with cooperative through holes 5011 for the first latching part 4011 to pass through.

The first latching part 4011 and the second latching part 4012 effectively install the front cover 401 on the embedded box 7, even in the area corresponding to the hinge fixing part 5, ensuring a firm connection of the front cover 401 to the embedded box 7, thereby avoiding the area of the front cover 401 away from the hinge assembly 2 from lifting.

Preferably, an extension length of the first latching part 4011 is greater than an extension length of the second latching part 4012. Since the first latching part 4011 needs to pass through the first connecting plate 501, setting the extension length of the first latching part 4011 longer enhances the stability of the connection between the first latching part 4011 and the first upper cooperative part 705.

Specifically, the two first upper cooperative parts 705 correspond one-to-one with the two first connecting plates 501 and are each located behind a first connecting plate 501, corresponding to the cooperative through holes 5011. The first upper cooperative part 705 includes a groove extending backward from the front side of the embedded box 7 and a protrusion extending downward from the top wall of the groove. The first latching part 4011 latches the rear wall of the protrusion to cooperate with the first upper cooperative part 705.

The lower cooperative structure comprises two first lower cooperative parts 707 respectively below the two first upper cooperative parts 705 and a second lower cooperative part 708 located between the two first lower cooperative parts 707.

When the front cover assembly 4 is in the first state, the two first latching parts 4011 respectively cooperate with the left first upper cooperative part 705 and the left first lower cooperative part 707, and the two second latching parts 4012 respectively cooperate with the first upper cooperative part 705 and the second lower cooperative part 708.

When the front cover assembly 4 is in the second state, the two first latching parts 4011 respectively cooperate with the left and right first upper cooperative parts 705 and the right first lower cooperative part 707, and the two second latching parts 4012 respectively cooperate with the first upper cooperative part 705 and the second lower cooperative part 708.

To accommodate the longer first latching part 4011, the first lower cooperative part 707 is located behind the second lower cooperative part 708.

Further, the second upper cooperative part 706 and the second lower cooperative part 708 can be a single slot extending in the left-right direction or multiple slots distributed in the left-right direction.

The front cover 401 is provided with a positioning part 4013 extending backward at one end in the left-right direction, and the positioning part 4013 is set at the end of the front cover 401 close to the first electronic device 402. A front side of the embedded box 7 is provided with two positioning grooves 709 distributed in the left-right direction. When the front cover assembly 4 is in the first state, the positioning part 4013 cooperates with the right positioning groove 709; when the front cover assembly 4 is in the second state, the positioning part 4013 cooperates with the left positioning groove 709. This serves as a positioning function during the assembly of the front cover 401, facilitating the assembly of the front cover 401 by the staff, and the cooperation between the positioning part 4013 and the positioning groove 709 enhances the stability of the front cover 401.

Specifically, the positioning groove 709 is disposed between the accommodation cavity 701 and the wiring cavity 702.

The embedded box 7 comprises an upper shell 710 and a lower shell 711 that are vertically aligned. The left and right sides of the upper shell 710 are provided with first inclined surfaces, and the lower shell 711 has second inclined surfaces that are suitable for the first inclined surfaces. The front end of the first inclined surface is lower than the rear end of the first inclined surface, or the front end of the first inclined surface is higher than the rear end of the first inclined surface. When the upper shell 710 and the lower shell 711 are aligned, the first inclined surface and the second inclined surface serve as positioning functions, facilitating the assembly of the upper shell 710 and the lower shell 711.

The door body 3 is provided with two wiring passages 301 distributed side by side in the left-right direction, and the wiring passages 301 extend to form holes on the side of the door body 3 close to the front cover assembly 4. The positions of the two wiring passages 301 correspond one-to-one with the two wiring cavities 702, facilitating the passage of harnesses from the wiring cavities 702 into the door body 3.

The front side of the control assembly 6 is equipped with a connector (not shown), and the door harness (not shown) is connected to the connector and passes through the connector into the wiring cavity 702 and then into the wiring passage 301.

The embedded box 7 has a partition wall 712 separating the accommodation cavity 701 from the wiring cavity 702. The front side of the partition wall 712 has a recess, and the refrigeration device further includes a seal 9 installed in the recess. The seal 9 has a wiring hole 901 through which the door harness passes. The seal 9 is used to allow the door harness to pass through and also enhances the sealing of the accommodation cavity 701, thereby improving electrical safety.

The wiring structure 8 is installed on the door body 3 and extends from the door body 3 into the interior of the wiring cavity 702. The wiring structure 8 has a wiring channel 801 inside that communicates with the wiring passage 301. The wiring structure 8 is movable relative to the wiring cavity 702, and the wiring channel 801 extends to an end of the wiring structure 8 that extends into the wiring cavity 702 to form an inlet. The door harness enters the wiring channel 801 through the inlet and then passes into the wiring passage 301.

The wiring channel 801 inside the wiring structure 8 is used to allow harnesses connected to the electronic components of the door body 3 to pass through. Since the wiring structure 8 extends into the embedded box 7, it improves space utilization. This embodiment effectively avoids the phenomenon of the door harness being pulled during the opening and closing of the door body 3 through the wiring structure 8 and can adapt to door bodies 3 with various motion trajectories. When the door body 3 rotates, the harnesses connected to the electronic components of the door body 3 and the wiring structure 8 move with the door body 3. During the movement of the harnesses, the wiring structure 8 protects the harnesses. Moreover, the wiring cavity 702 inside the embedded box 7 can protect the harnesses, prevent them from being exposed and worn, and separate the moving part of the harnesses from the control assembly 6 inside the accommodation cavity 701, improving electrical safety.

When the front cover assembly 4 is in the first state, the wiring structure 8 is installed on the right part of the door body 3 and extends into the wiring cavity 702 on the right side, and the wiring channel 801 communicates with a right wiring passage 301.

When the front cover assembly 4 is in the second state, the wiring structure 8 is installed on the left part of the door body 3 and extends into the wiring cavity 702 on the right side, and the wiring channel 801 communicates with a left wiring passage 301.

Further, the wiring structure 8 has an axial part 802 that extends into the wiring passage 301 from the top opening of the wiring passage 301, and the axial part 802 can rotate relative to the wiring passage 301, thereby rotating the wiring structure 8 installed on the door body 3.

The hinge assembly 2 comprises a first fixing part 201 for connecting to the hinge fixing part 5, a second fixing part 202 for connecting to the door body 3, and at least one connecting rod 203. The first fixing part 201 and the second fixing part 202 are respectively pivotally connected to the connecting rod 203.

The first fixing part 201 is located above the wiring structure 8 and the wiring cavity 702, and the second fixing part 202 protrudes downward relative to the first fixing part 201 and is located in front of the wiring structure 8. The second fixing part 202 can cover the opening of the wiring structure 8 and the wiring cavity 702, thereby enhancing the aesthetic appearance of the refrigeration device.

Further, the hinge assembly 2 further comprises a third fixing part 204, with the second fixing part 202 being installed on the door body 3 via the third fixing part 204. The second fixing part 202 and the third fixing part 204 are connected by fasteners, and the third fixing part 204 is connected to the top of the door body 3 by fasteners. The top of the door body 3 is provided with a positioning ring surrounding the top opening of the wiring passage 301, and the third fixing part 204 has a hole that fits over the positioning ring.

When switching the front cover assembly 4 between the first state and the second state, and it is necessary to install the hinge assembly 2 on the hinge fixing part 5 on the different side, the second fixing part 202, the third fixing part 204, and the connecting rod 203 are separated. Then, the first fixing part 201 and the connecting rod 203 are rotated 180°, so that the first fixing part 201 and the connecting rod 203 are symmetrical in the left-right direction when installed on different sides. Finally, the second fixing part 202 and the third fixing part 204 are moved parallel, and the second fixing part 202 is installed on the connecting rod 203, and the third fixing part 204 is installed on the door body 3.

The wiring cavity 702 is smaller than the accommodation cavity 701. The embedded box 7 has a first outlet 713 and a second outlet 714 distributed in the left-right direction and communicating with the accommodation cavity 701, with the first outlet 713 and the second outlet 714 located behind the wiring cavity 702. Since there are more components inside the accommodation cavity 701, the accommodation cavity 701 is made larger, and the area behind the smaller wiring cavity 702 of the embedded box 7 is used to allow the harnesses connected to the control assembly 6 to pass through.

The refrigeration device further comprises a drag chain 10 arranged in the wiring cavity 702. A fixed end of the drag chain 10 is fixed to an inner wall of the wiring cavity 702, and a movable end of the drag chain 10 is connected to the end of the wiring structure 8 that is farther from the door body 3, and the movable end of the drag chain 10 moves simultaneously with the wiring structure 8 when the wiring structure 8 moves. The door harness that enters the wiring cavity 702 first passes through the drag chain 10 and then enters the wiring channel 801. The drag chain 10 further protects the door harness, preventing the harness from being worn during the movement of the door body 3 and the wiring structure 8.

During the use of the refrigeration device, the front cover 401 only covers one side of the wiring cavity 702, and the larger opening of the other side of the wiring cavity 702 is exposed, affecting the aesthetic appearance. Therefore, the following two embodiments provide two different solutions for covering the wiring cavity 702.

In the first embodiment of the present application, the refrigeration device further includes a first decorative cover 11. When the front cover assembly 4 is in the first state, the first decorative cover 11 covers the wiring cavity 702 on the right side; when the front cover assembly 4 is in the second state, the first decorative cover 11 covers the wiring cavity 702 on the right side.

In this embodiment, only one first decorative cover 11 is used, and the position of the first decorative cover 11 is adjusted during the switching of the front cover assembly 4 between the first state and the second state to cover the wiring cavities 702 on both sides, simplifying the structure.

The first decorative cover 11 has a first opening 1103 exposing the wiring cavity 702. The wiring structure 8 and the door harness inside the wiring structure 8 pass through the first opening 1103.

Inner walls of the two wiring cavities 702 that are farther from the accommodation cavity 701 in the left-right direction are provided with first slots 715, and the top and bottom walls of the two wiring cavities 702 are provided with second slots 716 symmetrically arranged along the longitudinal direction. The rear side of the first decorative cover 11 has a first latching portion 1101 for engaging with the first slot 715 and two second latching portions 1102 symmetrically arranged along the longitudinal direction for engaging with the second slots 716. When switching the refrigeration device between the first state and the second state and changing the position of the first decorative cover 11, the first decorative cover 11 needs to be rotated 180° to adapt to the first slots 715 and the second slots 716 on the inner walls of the wiring cavities 702 on both sides.

When the front cover assembly 4 is in the first state, the first latching portion 1101 is located in the right part of the first decorative cover 11, the first latching portion 1101 engages with the right first slot 715, the upper second latching portion 1102 engages with the upper second slot 716, and the lower second latching portion 1102 engages with the lower second slot 716. When the front cover assembly 4 is in the second state, the first decorative cover 11 is rotated 180° relative to the previous state, the first latching portion 1101 is located in the left part of the first decorative cover 11, and the first latching portion 1101 engages with the left first slot 715. The original upper second latching portion 1102 moves to the lower position and engages with the lower second slot 716, and the original lower second latching portion 1102 moves to the upper position and engages with the upper second slot 716.

In this embodiment, when the position of the first decorative cover 11 needs to be adjusted, the first decorative cover 11 is rotated instead of simply moving parallel. The purpose is to make the first latching portion 1101 of the first decorative cover 11 symmetrical in the left-right direction when the front cover assembly 4 is in the first state and the second state, facilitating the cooperation of the first latching portion 1101 with the symmetrical first slots 715 on both sides.

Limited by the installation position of the wiring structure 8, the first opening 1103 cannot be set at the center of the first decorative cover 11. If the first decorative cover 11 is only moved parallel when installed on different sides, the position of the first opening 1103 is asymmetrical in the first state and the second state, and the wiring structure 8 cannot pass through the first opening 1103 into the wiring cavity 702. By rotating the first decorative cover 11, the symmetry of the first opening 1103 in the first state and the second state can be ensured, ensuring that the wiring structure 8 and the harness inside the wiring structure 8 can pass through the first opening 1103 in both the first state and the second state.

Further, the area of the first decorative cover 11 is larger than the opening area of the wiring cavity 702. This way, the first decorative cover 11 can also cover the walls of the embedded box 7, further enhancing the aesthetic appearance.

Since the wiring structure 8 is located above the door body 3, and limited by the volume of the refrigeration device, the device body 1 cannot be much higher than the door body 3. Therefore, the length of the accommodation chamber 104 in the longitudinal direction is small, and there is not enough space to ensure that the center of the wiring structure 8 is at the same height as the center of the opening of the accommodation cavity 701. Therefore, the center of the first decorative cover 11 cannot be ensured to be at the same height as the center of the wiring structure 8. After the first decorative cover 11 is rotated, the wiring structure 8 may not be able to pass through the first opening.

To solve this problem, the first decorative cover 11 also has a block 1104 installed on the first opening 1103. The longitudinal length of the first opening 1103 is greater than the longitudinal length of the block 1104. The first decorative cover 11 also has a first block fixing portion 1105 and a second block fixing portion 1106 distributed along the longitudinal direction.

When the first decorative cover 11 covers the wiring cavity 702 on the right side, the block 1104 is connected to the first block fixing portion 1105, and the area of the first opening 1103 not covered by the block 1104 is used for the wiring structure 8 and the harness inside the wiring structure 8 to pass through. When the first decorative cover 11 covers the wiring cavity 702 on the right side, the block 1104 is connected to the second block fixing portion 1106, and the area of the first opening 1103 not covered by the block 1104 is used for the wiring structure 8 and the harness inside the wiring structure 8 to pass through.

After the first decorative cover 11 is rotated, by moving the block 1104 up and down, the exposed position of the first opening 1103 can be made symmetrical in the left-right direction, ensuring that the first decorative cover 11 can effectively cover the opening of the wiring cavity 702 while preventing the wiring structure 8 from not being able to pass through the first decorative cover 11.

Specifically, the first block fixing portion 1105 and the second block fixing portion 1106 are set on the rear side of the first decorative cover 11. Two first block fixing portions 1105 are symmetrically set on both sides of the first opening 1103, and two second block fixing portions 1106 are symmetrically set on both sides of the first opening 1103. The first block fixing portion 1105 and the second block fixing portion 1106 are both provided with horizontally extending holes. The two sides of the block 1104 have limiting protrusions 11041 for abutting against the rear side of the first decorative cover 11, and the limiting protrusions 11041 are provided with teeth 11042 for engaging with the first block fixing portion 1105 and the second block fixing portion 1106.

The seal 9 is disposed behind the front cover 401 and the first decorative cover 11. In this way, the harness passing through the seal 9 is covered by the first decorative cover 11 and does not expose, on one hand enhancing the aesthetic appearance, and on the other hand preventing the harness from being worn due to exposure.

In the third embodiment of the present application, the refrigeration device further includes symmetrically arranged second decorative cover 12 and third decorative cover 13 in the left-right direction. When the front cover assembly 4 is in the first state, the second decorative cover 12 covers the wiring cavity 702 on the right side. When the front cover assembly 4 is in the second state, the third decorative cover 13 covers the wiring cavity 702 on the left side.

The second decorative cover 12 and the third decorative cover 13 are respectively provided with second openings 1201 and third openings 1301 for exposing the wiring cavity 702. The wiring structure 8 and the door harness inside the wiring channel 801 pass through the second opening 1201 or the third opening 1301.

The top and/or bottom walls of the wiring cavity 702 are provided with third slots 717 and guide grooves 718. The guide grooves 718 extend horizontally at a preset angle to the left-right direction and form openings on the front side of the embedded box 7.

The rear side of the second decorative cover 12 has a third latching portion 1202 for engaging with the third slot 717 on the right side and a first guide block 1203 for engaging with the guide groove 718 on the right side. The rear side of the third decorative cover 13 has a fourth latching portion 1302 for engaging with the third slot 717 on the left side and a second guide block 1303 for engaging with the guide groove 718 on the left side.

When assembling the second decorative cover 12, the first guide block 1203 is inserted from the front to the back into the guide groove 718, and then the second decorative cover 12 is pushed so that the first guide block 1203 moves along the guide groove 718 until the third latching portion 1202 engages with the third slot 717. When assembling the third decorative cover 13, the second guide block 1303 is inserted from the front to the back into the guide groove 718, and then the third decorative cover 13 is pushed so that the second guide block 1303 moves along the guide groove 718 until the fourth latching portion 1302 engages with the third slot 717.

The rear side of the second decorative cover 12 also has a first support block 1204 for placing on the bottom wall of the wiring cavity 702. The rear side of the third decorative cover 13 also has a second support block 1304 for placing on the bottom wall of the wiring cavity 702. The first support block 1204 and the second support block 1304 are respectively used to enhance the stability of the second decorative cover 12 and the third decorative cover 13.

The detailed descriptions listed above are merely specific explanations for the feasible implementation of the present application and are not intended to limit the protection scope of the present application. Any equivalent implementation or modification made without departing from the spirit of the present application should be included within the protection scope of the present application.

## Claims

1. A refrigeration device, comprising:
a device body having a compartment and an accommodation chamber both opening forward;
a door body disposed in front of the device body to open or close the compartment;
an embedded box disposed in the accommodation chamber, the embedded box having two wiring cavities opening forward and arranged side by side in a left-right direction;
a front cover assembly disposed in front of the accommodation chamber;
**characterized in that**: the front cover assembly has a first state where it covers the wiring cavity on a left side and exposes the wiring cavity on a right side, and a second state where it covers the wiring cavity on the right side and exposes the wiring cavity on a left side.

2. The refrigeration device according to claim 1, wherein the door body is provided with two wiring passages distributed side by side in the left-right direction, and the wiring passages extend to form holes on the side of the door body close to the front cover assembly, with the positions of the two wiring passages corresponding one-to-one with the two wiring cavities.

3. The refrigeration device according to claim 2, wherein the refrigeration device further comprises a control assembly and a door harness, the embedded box defines an accommodation cavity opening forward and located between the two wiring cavities, the control assembly is disposed in the accommodation cavity, a front side of the control assembly is equipped with a connector, the door harness is connected to the connector and passing through the connector into the wiring cavity and then into the wiring passage.

4. The refrigeration device according to claim 3, wherein the embedded box has a partition wall separating the accommodation cavity from the wiring cavity, the partition wall has a recess on a front side thereof, the refrigeration device further comprises a seal installed in the recess, the seal has a wiring hole through which the door harness passes.

5. The refrigeration device according to claim 3, wherein the refrigeration device further comprises a wiring structure installed on the door body and extending from the door body into the interior of the wiring cavity, the wiring structure defines a wiring channel communicating with the wiring passage, the wiring structure is movable relative to the wiring cavity, the wiring channel extends to an end of the wiring structure that extends into the wiring cavity to form an inlet; the door harness is entering the wiring channel through the inlet and then passing into the wiring passage.

6. The refrigeration device according to claim 5, wherein when the front cover assembly is in the first state, the wiring structure is installed on the right part of the door body and extends into the wiring cavity on the right side, the wiring channel is communicating with a right wiring passage;
when the front cover assembly is in the second state, the wiring structure is installed on the left part of the door body and extends into the wiring cavity on the left side, the wiring channel is communicating with a left wiring passage.

7. The refrigeration device according to claim 5 or 6, wherein the refrigeration device further comprises a first decorative cover, the first decorative cover covers the wiring cavity on the right side when the front cover assembly is in the first state, and covers the wiring cavity on the left side when the front cover assembly is in the second state;
the first decorative cover has a first opening exposing the wiring cavity, through which the wiring structure passes.

8. The refrigeration device according to claim 7, wherein inner walls of the two wiring cavities that are farther from each other in the left-right direction are provided with first slots, and the top and bottom walls of the two wiring cavities are provided with second slots symmetrically arranged along a longitudinal direction;
a rear side of the first decorative cover has a first latching portion for engaging with the first slot, and two second latching portions are symmetrically arranged along the longitudinal direction for engaging with the second slots.

9. The refrigeration device according to claim 8, wherein the first decorative cover has a block installed on the first opening, a longitudinal length of the first opening is greater than a longitudinal length of the block, the first decorative cover further has a first block fixing portion and a second block fixing portion arranged along the longitudinal direction;
when the first decorative cover covers the wiring cavity on the right side, the block is connected to the first block fixing portion, and when the first decorative cover covers the wiring cavity on the right side, the block is connected to the second block fixing portion.

10. The refrigeration device according to claim 5 or 6, wherein the refrigeration device further comprises a second decorative cover and a third decorative cover symmetrically arranged in the left-right direction, the second decorative cover covers the wiring cavity on the right side when the front cover assembly is in the first state, and the third decorative cover covers the wiring cavity on the right side when the front cover assembly is in the second state, the second decorative cover and the third decorative cover respectively have second openings and third openings exposing the wiring cavity, through which the wiring structure passes.

11. The refrigeration device according to claim 10, wherein the top and/or bottom walls of the wiring cavity are provided with third slots and guide grooves, the guide grooves extend horizontally at a preset angle to the left-right direction and forms openings on the front side of the embedded box;
the rear side of the second decorative cover has a third latching portion for engaging with the third slot on the right side and a first guide block for engaging with the guide groove on the right side, the rear side of the third decorative cover has a fourth latching portion for engaging with the third slot on the left side and a second guide block for engaging with the guide groove on the left side.

12. The refrigeration device according to claim 11, wherein the rear side of the second decorative cover further has a first support block for placing on the bottom wall of the wiring cavity, and the rear side of the third decorative cover further has a second support block for placing on the bottom wall of the wiring cavity.

13. The refrigeration device according to claim 5, wherein the refrigeration device further comprises a drag chain disposed in the wiring cavity, a fixed end of the drag chain is fixed to an inner wall of the wiring cavity, and a movable end of the drag chain is connected to the end of the wiring structure that is farther from the door body.

14. The refrigeration device according to claim 3, wherein when the front cover assembly is in the first state and the second state, the front cover assembly covers the accommodation cavity and the control assembly.

15. The refrigeration device according to claim 14, wherein the front cover assembly comprises a front cover and a first electronic device installed on a rear side of the front cover; the control assembly has a connecting part for connecting to the first electronic device;
the connecting part is connected to the first electronic device when the front cover assembly is in the first state and the second state, the front cover assembly rotates 180° about an axis passing through the center of the first electronic device and extends in the front-back direction when transitioning from the first state to the second state.

16. The refrigeration device according to claim 15, wherein the first electronic device is offset from the center of the front cover in the left-right direction, and the first electronic device is aligned with the center of the front cover in height.
